# EUROPEAN PATENT SPECIFICATION

(11) **EP 1 798 890 B1**
(45) Date of publication and mention of the grant of the patent: **18.03.2009**
(21) Application number: 05027537.9
(22) Date of filing: 15.12.2005
(51) Int. Cl.: H04L 12/12, H04L 29/06, H04L 29/12

(54) **Methods, device and computer program product for maintaining mapping relationship**
Verfahren, Apparat und Computerprogrammprodukt zur Beibehaltung von Abbildungszuordnungen
Procédé, appareil et produit de logiciel pour ordinateur pour maintenir des rapports de mappage

(43) Date of publication of application: 20.06.2007
(73) Proprietor: Nokia Corporation, 02150 Espoo (FI)
(72) Inventor: Eronen, Pasi, 00810 Helsinki (FI); Tarkkala, Lauri, 02660 Espoo (FI); Haverinen, Henry, 40250 Jyväskylä (FI)
(74) Representative: Eisenführ, Speiser & Partner

(56) References cited:
- HUTTUNEN F-SECURE CORPORATION B SWANDER MICROSOFT V VOLPE CISCO SYSTEMS L DIBURRO NORTEL NETWORKS M STENBERG A: "UDP Encapsulation of IPsec ESP Packets; rfc3948.txt;" IETF STANDARD, INTERNET ENGINEERING TASK FORCE, IETF, CH, January 2005 (2005-01), pages 1-15, XP015009720 ISSN: 0000-0003

## Description

### FIELD OF THE INVENTION

The present invention relates to methods, a client device, and computer program products for maintaining state information of a device in an intermediate network function, wherein said state information expires after a predetermined idle period.

### BACKGROUND OF THE INVENTION

Network Address Translators (NATs) are used to interconnect a private network consisting of unregistered IP (Internet Protocol) addresses with a global IP network using limited number of registered IP addresses. NATs are also used to avoid address renumbering in a private network when topology outside the private network changes for variety of reasons, such as customers changing Service Providers, company backbones being reorganized, or Service Providers merging or splitting. In addition, there are many other applications of NAT operation.

Basic Network Address Translation (Basic NAT) is a method by which IP addresses are mapped from one group to another, transparent to end users. Network Address Port Translation, or NAPT is a method by which many network addresses and their Transmission Control Protocol/User Datagram Protocol (TCP/UDP) ports are translated into a single network address and its TCP/UDP ports. Together, both these operations are referred to as traditional NAT.

Another type of address translation when the private network and the global IP network use different IP versions, e.g., the private network uses IPv4, while the global network uses IPv6. In this case a Network Address Translation - Protocol Translator (NAT-PT) or a Network Address and Port Translation - Protocol Translator (NAPT-PT) are used between the networks.

Unless mentioned otherwise, the term NAT, as used hereinafter, will pertain to traditional NAT, namely basic NAT, NAPT as defined in the IETF (Internet Engineering Task Force) specification RFC 2663, NAT-PT, NAPT-PT as defined in the IETF RFC 2766, and to the devices performing these functions, e.g., Network Address Translators, and Network Address and Port Translators - Protocol Translators.

NATs require packets flowing from the inside (private network) to the outside (public network), to create a NAT mapping (or NAT binding), i.e. address mapping, and to maintain the NAT mapping. NAT mappings can be specific to a single source address, to source Transport Address (IP address and port) or in certain NAT types even to Source and Destination Transport Address pair. Since a NAT has only a limited number of IP addresses and ports to allocate, a NAT mapping is typically released after a certain time of inactivity. In other words, it is assumed that the binding is no longer needed. This means that in order to create and maintain a NAT mapping the concerned device which will use the source address has to send data packets. However, this is not always convenient because, for example, the concerned device may not be sending data packets at this stage or not frequently enough, for example when the device is active and registered to a VolP (Voice over IP) network but is just waiting for the incoming call. Although NAT mappings can be statically provisioned, using such a method lacks flexibility and requires a lot of provisioning. Furthermore there are still NAT devices that are out of control of the service (for example VoIP service) operator.

In current access networks NAT devices performing address and port translation are widely deployed. In general, the access network can contain more than one NAT device. As regards NAT traversal for the Session Initiation Protocol (SIP), there can be cases where NAT devices in the access network are operated by others than the operator of the SIP core network (for example an Internet Protocol Multimedia Subsystem (IMS)) or even in end users' premises. Thus, it cannot be assumed that a SIP core server (for example a Proxy Call Session Control Function (P-CSCF)) can control those NAT device(s). Whenever a terminal device, such as mobile phone or user equipment (UE) accesses an outbound SIP proxy via a NAT device, the NAT creates a binding. This binding will be released after a reasonable time if no packet belonging to that binding has been forwarded. If the binding is released, the terminal device becomes unavailable from the outbound SIP proxy.

The lifetime problem of the NAT mapping when UDP is used can be resolved if the terminal device periodically sends some kind of refreshing messages over that "UDP connection" with adequate frequency. Some NAT types refresh the binding upon incoming (SIP server to terminal) traffic also but that is not the general behavior. The interval of sending the refreshing messages should be adjusted to the binding lifetime in the NAT device, that is in term of tens of seconds. This relatively short binding lifetime implies that the refreshing frequency is very high compared to the normal rate for signaling and therefore can cause performance problem for the outbound SIP proxy.

In a typical IPv4 configuration, a local network uses IP addresses from one of the private IP address ranges (for example 192.168.x.x and 10.x.x.x). A NAT router in the local network is connected to the Internet with at least one publicly routable IP address. As terminals send traffic from the local network, the NAT router translates the local IP address to the public address(es). Usually, the router also modifies the TCP and UDP port numbers. The NAT router keeps track of active connections so that it is able to translate "downlink" packets to the correct local addresses. The information about an active TCP connection or UDP "session" is called a NAT mapping. The NAT mappings are automatically created when the terminal sends a packet, and expire after they have been unused for some time (i.e., the NAT mapping has not been used to translate any packets).Typically the idle timeout is 30-60 seconds for UDP mappings and 1 hour for TCP mappings.

Because the NAT mappings are created based on uplink packets from the terminal, servers outside the NAT are not able to send packets to the terminal if the NAT mapping has expired. To prevent this, many protocols include a keep-alive mechanism where the terminal regularly sends "dummy" packets to the host outside the NAT. These dummy packets will reset the expiry timers in intermediate NATs and firewalls. If there is regular traffic, then the mappings will be kept alive anyway, so the keep-alive packets are needed only when the terminal is idle. Since NATs typically work only with TCP and UDP traffic, other protocols have to be mapped to TCP or UDP to work with NATs.

IPsec NAT Traversal (as defined in the Internet Engineering Task Force (IETF) specifications RFC3947and RFC3948, and in the Internet Key Exchange Protocol IKEv2) specifies how IPsec ESP (Encapsulating Security Payload) packets are encapsulated within UDP. The client sends dummy "NAT-Keep-alive" packets to the IPsec gateway when there is no regular traffic to send. The frequency is a preconfigured parameter, and there is no dynamic mechanism to try to change the frequency.

Mobile IPv4 NAT traversal extension (as defined in the IETF specification RFC3519) also uses UDP encapsulation (instead of IP-in-IP) to traverse NATs, and has a similar keep-alive mechanism. The keep-alive packets are "dummy" ICMP echo requests the terminal sends to the home agent. Mobile IPv4 NAT traversal also specifies a mechanism by which the home agent can suggest a certain keep-alive frequency.

The standard-based NAT traversal protocols for Mobile IP and IPsec use UDP encapsulation, since Mobile IP and IPsec tunnels can be used for both UDP and TCP based protocols, and running a UDP based protocol over a TCP-based tunnel could result in performance problems. Also real-time applications, such as voice, would work poorly over TCP.

As Mobile IP and IPsec are general-purpose protocols, which work for real-time and non-real-time applications, the encapsulation is UDP based. However, the use of UDP requires frequent keep-alives to keep the NAT mappings alive. These keep-alive procedures may consume non-insignificant amounts of power, especially if the applications being used over IPsec or Mobile IPv4 require the terminal to be reachable at any time. This is the case for, e.g., push email, voice-over-IP, and Unlicensed Mobile Access (UMA). For many always-on applications, the device needs to transmit or receive frequent keep-alive messages during the idle times in order to refresh the soft state in the application servers or intermediate firewalls and NAT devices. The keep-alive procedures may however consume too much energy, so that the battery lifetime of the mobile device is compromised. As a result, standby time may be reduced significantly.

### SUMMARY OF THE INVENTION

It is therefore an object of the present invention to provide an improved scheme for maintaining address mappings or bindings, which allows a client to be reachable at reduced power consumption.

According to a first aspect of the present invention, this object is achieved by a method of maintaining a state information of a device in an intermediate network function, wherein said state information expires after a predetermined idle period, said method comprising the steps of:
- detecting an idle state of said device;
- changing a transport protocol used for encapsulating data, transmitted to or from said device, from a first protocol with a first predetermined idle period to a second protocol with a second predetermined idle period, in response to the result of said detecting step, said second predetermined idle period being longer than said first predetermined idle period.

Furthermore, according to the first aspect, the above object is achieved by a client device for maintaining a state information of a device in an intermediate network function, wherein said state information expires after a predetermined idle period, said client device comprising:
- detecting means for detecting an idle state of said first connection;
- control means for changing a transport protocol used for encapsulating data from a first protocol with a first predetermined idle period to a second protocol with a second predetermined idle period, in response to the result of said detecting step, said second predetermined idle period being longer than said first predetermined idle period.

Finally, according to the first aspect, the above object is solved by a computer program product comprising code means for generating all steps of the above method when run on a computer device.

As an alternative, according to second aspect of the present invention, the above object is achieved by a method of maintaining a state information of a device in an intermediate network function, wherein said state information expires after a predetermined idle period, said method comprising the steps of:
- setting up a first connection to said device based on a first transport protocol used for encapsulating data with a first predetermined idle period;
- providing a connection parameter for a parallel second connection in a set-up negotiation via said first connection;
- using said connection parameter for setting up a parallel second connection to said device based on a second transport protocol with a second predetermined idle period, said second predetermined idle period being longer than said first predetermined idle period;
- transmitting an information linking said first and second connections from said device (10);
- detecting an idle state of said device (10); and
- using said second connection for transmitting a wake-up notification to said device (10) if said idle state has been detected.

Finally, according to the second aspect, the above object is solved by a computer program product comprising code means for generating the setting, first using and transmitting steps of the above method run on a computer device, e.g., of a client device. Additionally, according to the second aspect, the above object is solved by a computer program product comprising code means for generating the providing, detecting and second using steps of the above method when run on a computer device, e.g., of a gateway device.

According a third aspect of the present invention, a separate notification agent is introduced. Then, the above object is achieved by a method of maintaining a state information of a first device in an intermediate network function, wherein said state information expires after a predetermined idle period, said method comprising the steps of:
- setting up a first connection between said first device and a second device with a first predetermined idle period;
- providing implicitly a connection parameter for a parallel second connection in a set-up negotiation via said first connection, said connection parameter being visible to nodes that can observe the set-up of the first connection between said first device and said second device;
- using said connection parameter for setting up a parallel second connection between said first device and a separate notification agent with a second predetermined idle period, said second predetermined idle period being longer than said first predetermined idle period, said notification agent being arranged to reside in the data path between said first device and said second device or to co-locate as a separate function with the second device;
- detecting an idle state of said first device (10); and
- using said second connection for transmitting a wake-up notification from said notification agent to said first device (10) in response to said detecting step.

Finally, according to the third aspect, the above object is solved by a computer program product comprising code means for generating the first using, detecting and second using steps of the above method when run on a computer device, e.g., of a client device.

All first, second and third aspects are linked by basic concept of using a first connection with a shorter idle period when the data traffic is judged busy and using a second connection with a longer idle period when the data traffic is judged idle.

Accordingly, the number of keep-alive packets and thus power consumption can be reduced, but still the client is allowed to be reachable when needed. Always-on connections, such as Mobile IP (Internet Protocol) or VPN (Virtual Private Network) connections, can be maintained for very long times without compromising battery life, due to the fact that a reduced number of keep-alive packets can be sent during idle states where the second protocol or the second connection is used. Moreover, real-time applications that need encapsulation based on the first transport protocol during active sessions can be supported.

According to a specific example, the state information may be a mapping relationship in an address translation function used for providing a translation between a first address used for addressing the device from inside a data network and a second address used for addressing the device from outside the data network. As an alternative, in the first aspect, the state information may be a filter state information of a firewall function used for deciding on whether to let pass or filter out data packets.

In the first aspect, when there is an active user-plane session of the second protocol, it is possible to use encapsulation of the first transport protocol, so that no problems occur from running the second transport protocol over the second transport protocol.

All aspects work with existing NATs, do not assume that NAT configuration can be changed, and do not require the NAT to support any "middlebox signaling protocol".

As an example, the first protocol can be based on User Datagram Protocol (UDP) and the second protocol can be based on Transmission Control Protocol (TCP). In this case, in many commercial GPRS (General Packet Radio Services) deployments, the expiry timer for UDP is 40s, but for TCP as long as 1 h, which saves a lot of keep-alive transmissions.

In all aspects, the protocol that is run over the first transport protocol may be tunnel mode Internet Protocol Security (IPsec), Mobile Internet Protocol (Mobile IP), an IPv6 transition mechanism protocol, or any other tunneling protocol. The protocol that is run over the first transport protocol may also be Session Initiation Protocol (SIP), Open Mobile Alliance Device Management (OMA DM) protocol, or any other application protocol.

The third aspect works with existing implementations of the second device, such as existing Virtual Private Network (VPN) gateway or Mobile Internet Protocol Home Agent.

In all aspects, the idle state detecting step may comprise determining an amount of traffic transmitted by the device within a predetermined period of time and comparing the detected amount with a predetermined threshold. As an alternative, the idle state detection may comprise determining an amount of time passed since the device has transmitted its last data packet

In the first aspect, the changing step may comprises initiating a re-registration procedure, or alternatively an Internet key exchange signaling.

In the second or the third aspect, an authenticated packet may be transmitted from the device via the address translation function in response to a receipt of the wake-up notification. As an example, this authenticated packet may be an Internet Key Exchange (IKE) information request or an Encapsulating Security Payload (ESP) packet, which may be a dummy packet, for example.

The set-up negotiation of the second aspect and/or third aspect may be an Internet Key Exchange negotiation for a security association or a Mobile Internet Protocol registration.

Furthermore, the connection parameter of the second aspect and/or third aspect may comprise at least one of port number and a connection identifier to be used for the second connection. Additionally, step of exchanging a key for authenticating the second connection between the device and the data network. The information linking the first and second connections may comprise a security parameter index.

As a specific example of the second and/or third aspect, the wake-up notification may consist of a single data byte.

Further, in the second aspect, a copy of packets transmitted via the first connection may be stored at the data network for a predetermined time period, and the stored copies may then be resent if a packet with different addressing information is received from the device. Transmission of keep-alive packets may be disabled for maintaining the mapping relationship of the first connection, if the idle state has been maintained for a predetermined time period. Furthermore, transmission of the wake-up notification may also be performed in parallel via the first connection.

As a further alternative of the second aspect, the second connection may be established by the gateway device to a separate notification agent, wherein the signaling control means may then be configured to trigger the notification agent to transmit the wake-up notification to the client device.

Further advantageous modifications are defined in the dependent claims.

### BRIEF DESCRIPTION OF THE DRAWINGS

The present invention will now be described based on embodiments with reference to the accompanying drawings in which:
Fig. 1 shows a schematic block diagram of a network architecture in which the present invention can be implemented;
Fig. 2 shows an example of a NAT traversal for a Virtual Private Network;
Fig. 3 shows a signaling diagram indicating message exchange and resulting processing steps according to a first embodiment;
Fig. 4 shows a more detailed signaling diagram indicating message exchange and resulting processing steps according to an implementation example of said first embodiment;
Fig. 5 shows a signaling diagram indicating message exchange and resulting processing steps according to a second embodiment
Fig. 6 shows a schematic block diagram of a client device which is connected via a NAT device to a gateway device, according to the first and second embodiments.

### DETAILED DESCRIPTION OF THE EMBODIMENT

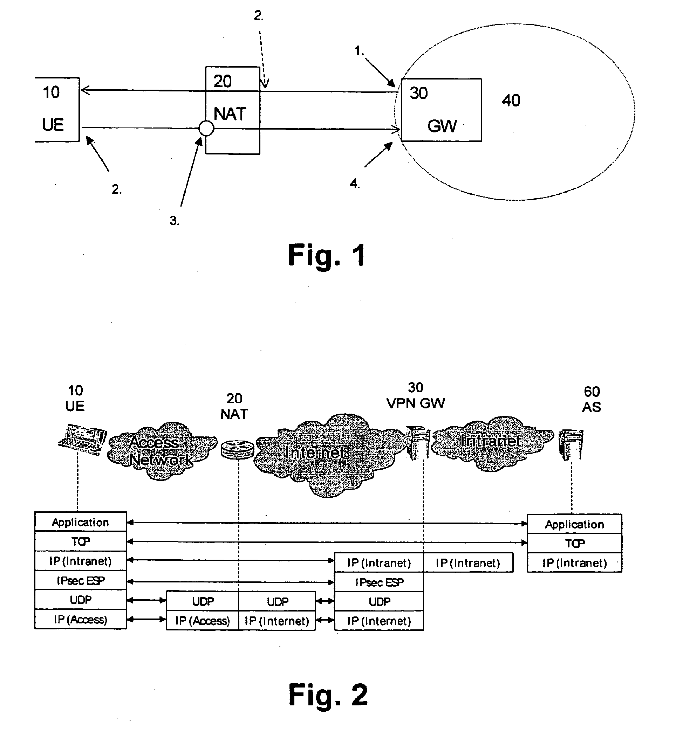

In the following, the first and second embodiment will be described based on a network environment as shown in Fig. 1.

According to Fig. 1, a client device 10 (e.g. mobile device or user equipment (UE)) provided in a first network, e.g. a private network or a radio access network with an own addressing function, is connected via a NAT functionality or device 20 and a gateway device 30 (e.g. in a Virtual Private Network (VPN) configuration) or a home agent device (e.g. in a Mobile IP configuration) to a second network 40, which may be, for example, a core network of a third generation mobile communication system or a company Intranet.

In the following, basic signaling steps are described based on the sequential numbering shown in Fig. 1. In step 1, the gateway device 30, which may be a VPN gateway sends a data packet or message to the UE 10. In step 2, the dedicated message traverses the NAT device 20, but may not refresh NAT mapping as it forms incoming traffic. Having received the dedicated message, the UE 10 sends in step 3 a response message back to the network. This response forms outgoing traffic and thus refreshes the NAT mapping in step 4. In step 5, the gateway device 30 has processes the response sent by the UE 10.

As already mentioned initially, the NAT device 20 will delete the session state with the address mapping if no (uplink) packets have been sent for some time (e.g. predetermined idle period). If this happens, any packets from the gateway device 30 to the client device 10 will be dropped by the NAT device 20. However, the situation will be corrected when the client device 10 sends a new packet to the gateway device 30. To prevent the NAT device 20 from deleting the service state, the client device 10 must send some packets regularly. In this regards, IETF (Internet Engineering Task Force) specification RFC3948 requires that if there is no ordinary IPsec ESP traffic to be sent, the client device 10 regularly sends special "NAT Keep-alive" packets, which leads to an increased energy consumption. The gateway device 30 ignores these packets when it receives them.

Fig. 2 shows a NAT traversal with a VPN. The access network uses local IP addresses, so that a mobile client device's 10 lowest IP layer is using a local IP address. A NAT device 20 (e.g. NAT router) translates the local address to a global Internet address. The gateway device 30 (e.g. IPsec VPN gateway) sees the connection coming from the NAT devices 20 public IP address and the UDP port, which the NAT device 20 has allocated for this connection. The gateway device 30 has allocated another IP address for the client device 10 from the address space used in the Intranet. TCP and application protocols run end-to-end between the mobile client device 10 and an application server 60 at the other connection end.

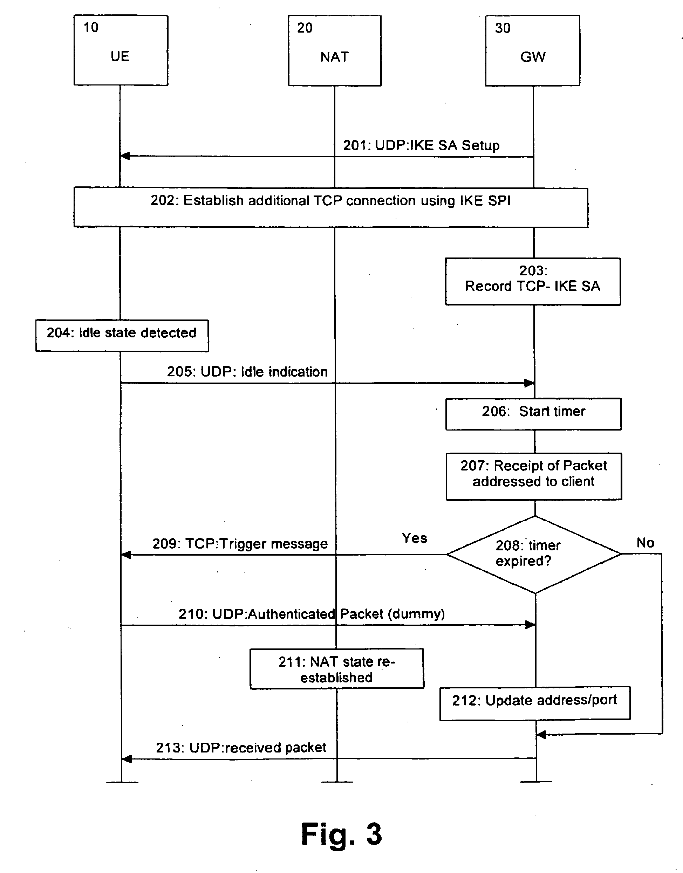

Fig. 3 shows a signaling diagram indicating message exchange and resulting processing steps according to the first embodiment, which corresponds to the above-mentioned second aspect of the present invention. In the first embodiment, when the IKE security association (SA) of the VPN is set up in step 201 using the UDP connection, the client device 10 establishes a separate additional TCP connection to the gateway device 30 (step 202) using for example a IKE Security Parameter Index (SPI). The gateway device 30 then records in step 203 which TCP connection corresponds to which IKE SA. The client device 10 thus does not need to send any UDP keep-alive packets (IPsec ESP packets are sent over UDP as usual).

The gateway device 30 may keep track when it has last received a packet from the client device 10. As an alternative, as indicated in Fig. 3, the client device may detect an idle state thereof (step 204), e.g. based on a timer function which counts the time period since the last packet has been transmitted over the concerned connection or which counts a predetermined time period during which the client device 10 determines an average traffic flow over the concerned connection and compares this average traffic flow with a predetermined threshold below which an idle state is determined. If the client device 10 has detected an idle state, it transmits an idle notification to the gateway device 30 via the UDP connection (step 205). In response to this idle notification or, alternatively, the last packet received, the gateway device 30 starts a timer function (step 206).

When a packet addressed to the client device 10 is received (step 207) and the gateway device 30 needs to send the received packet to the client device 10, the timer count is checked in step 208. If it is determined that more than a predetermined time (e.g., 30-60 seconds) has passed since the idle notification had been received or, alternatively, since a packet was last received from the client device 10, the gateway device 30 sends a "wake-up" trigger message to the client over the TCP connection (step 209). Otherwise, the gateway device 30 assumes valid NAT mapping and directly forwards the received packet via the UDP connection in step 213.

When the client receives a trigger message via the parallel or auxiliary TCP connection, it sends an authenticated packet (e.g. IKEv2 informational request or ESP "dummy" packet) to the gateway 30 in step 210. This packet re-establishes in step 211 the NAT state of the NAT device 20 if it was lost, and causes the gateway device 30 to update the address/port in step 212, e.g. as in normal IKEv2 NAT Traversal. Finally, the gateway device 30 may send the received packet via the UDP connection to the client device 10 (step 213).

To keep the NAT device 20 from deleting the state for the additionally established TCP connection, TCP keep-alive packets have to be sent. However, these can be sent once every 15-30 minutes (instead of seconds), so they do not consume significant amounts of power.

Support for the proposed feature according to the first embodiment can be negotiated when the IKE SA is created using normal IKE negotiation mechanisms (e.g. Vendor-ID and/or Notification payloads). The gateway device 30 can then send the port number to be used to the client device 10.

When the TCP connection is opened, the gateway device 30 needs to know which IKE SA this TCP connection corresponds to. A simple way is to send the IKE SPI. The TCP connection could also be secured using a cryptographic key (sent at the same time as the port number).

The wake-up trigger message could be, for instance, a single byte with value 1. Of course, any other value or length could be selected.

If the TCP connection is broken for some reason, this can be detected, and the client device 10 can re-establish the TCP connection.

In cases where the gateway device 30 does not assign a new IP address for the client device 10, an IPsec Security Policy Database may need to be updated, so that the TCP connections goes through without IPsec processing. This is however not required in typical remote access VPN situations.

As an optional modification, when there is a possibility that NAT state has expired, the gateway device 30 may send the packets over the UDP connection in any case, but may keep copies of them for a couple of seconds. Then, if during these couple of seconds, e.g. 1 or 2s, it receives a packet from the client device 10, that has a different IP address/port number, it resends the buffered packets.

As another optional modification, if the client has been active recently, it could still send ordinary UDP keep-alive packets, e.g. every 20-30 seconds, and disable them only when it has been idle for a longer period, e.g., several minutes.

In the following, a more detailed description of an implementation example of the first embodiment is given. The implementation relates to an extension of IPsec and Mobile IPv4 NAT Traversal, which may be called "TCP Wake-Up" and which significantly reduces the number of keep-alive packets or messages (and thus power consumption) when the client device 10 (e.g. terminal) is idle.

As explained in connection with Fig. 3, the basic idea is to establish a separate TCP connection between the client device 10 and the gateway device 30 (in VPN) or home agent (in Mobile IP), and use this TCP connection to "wake up" the client device 10 when it needs to be reached. The data packets are still sent using UDP encapsulation, avoiding the performance problems associated with TCP encapsulation. However, when the client device 10 is idle, the NAT mappings for UDP can be allowed to expire without losing reachability.

The keep-alive procedure is still needed for the TCP connection, but since the typical TCP mapping timeout is much larger than for UDP, the number of packets and power consumption is significantly reduced.

In a typical session using this extension, the use of this extension is negotiated using suitable vendor-specific payloads during IKE SA establishment or Mobile IPv4 registration. The gateway device 30 (or home agent in Mobile IP - in the following the reference to the alternative home agent will be omitted for reasons of brevity) sends to the client device 10 a connection parameter, e.g., a TCP port number and a connection identifier. They may also establish a secret key that will be used to authenticate the TCP connection. When the client device 10 is not idle, it may send UDP keep-alives. The client device 10 establishes a TCP connection to the port given by the gateway device 30, sends the connection identifier, and performs authentication using the key established earlier. The TCP connection can be established when the client device 10 establishes the IKE SA, or it can be postponed until the client device 10 is about to enter idle mode.

When the client device 10 has become idle, it may inform the gateway device 30 (or the gateway device 30 may detect this on its own), and stops sending normal UDP keep-alives. After a while, the UDP NAT mapping expires. The client device 10 detects that it has become idle based on the amount of recently sent and received packets in the IPsec/Mobile IPv4 tunnel.

Later, when the gateway device 30 has a packet to be sent to the client device 10, it sends a wake-up message over the TCP connection. As before, it also sends the packet using UDP encapsulation, although it is quite likely this packet will be dropped by the NAT device 20 since it cannot find the correct mapping. When the client device 10 receives the wake-up message, it updates the NAT mappings. In the case of IPsec, it sends an authenticated UDP-encapsulated ESP or IKEv2 message to the gateway device 30. This causes a new NAT mapping to be created, and when the gateway device 30 receives this packet, it stores the new mapping (most likely the port number has changed). In the case of Mobile IPv4, the client device 10 may send a new registration request, which has the same effect, i.e., a new NAT mapping is created and the home agent (which corresponds to the gateway device 30) now knows the new port number. The client device 10 may also start sending UDP keep-alives again, and may inform the gateway device 30 that it has left idle mode.

Waking up can also be triggered by an outgoing packet at the client device 10. The procedure for updating the NAT mapping and leaving idle mode is the same as above.

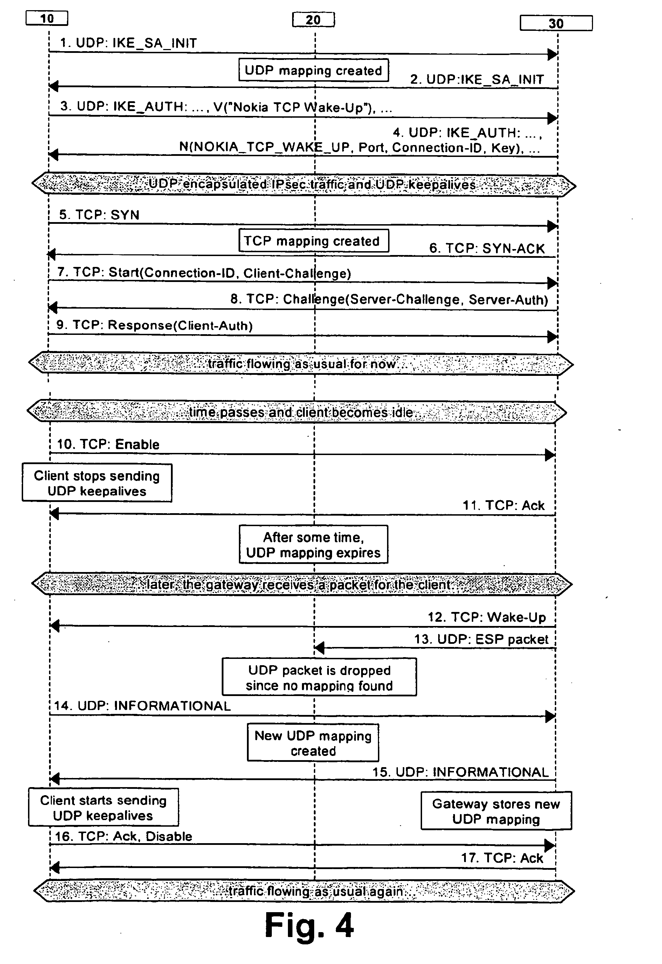

Fig. 4 shows a more detailed signaling diagram indicating message exchange and resulting processing steps according to an implementation example of the first embodiment, when an IKE SA is established with the proposed TCP wake-up extension according to the first preferred embodiment.

If the client device 10 supports the proposed wake-up functionality according to the first preferred embodiment, it includes a Vendor ID payload in the first IKE_AUTH request message (message 3 in Fig. 4). A predetermined value, e.g. hash code, can be allocated for this payload, which may be followed by one byte corresponding to the highest version of this extension supported. If the responder (gateway device 30) receives the TCP Wake-Up Vendor-ld in IKE_AUTH, and also wishes to use this extension, it includes a corresponding TCP_WAKE_UP notification in the IKE-AUTH response message (in case of multiple IKE_AUTH exchanges, in the response containing the SA payload).

This notification includes the port number the responder is listening on for TCP connections, a connection identifier that will be used by the client when establishing the TCP connection, and a key for authenticating the TCP connection. The connection identifier can be freely chosen by the responder (using the IKE SPIs is one possibility). The key may be just a 128-bit random value chosen by the responder. The payload format can be set so that the Protocol ID and SPI fields are set to zero, and the notification data contains a predetermined byte sequence.

Next, the client device 10 establishes the TCP connection (messages 5-9 in Fig. 4). It contacts the gateway device 30 at the port it received in the TCP_WAKE_UP notification (and same IP address as used for IKEv2), and sends a "Start" message containing the Connection-ID and a random challenge. The server responds with a "Challenge" message containing its own challenge and a Message Authentication Code (MAC) authenticating the gateway device 30. The "Response" message of the client device 10 may contain a MAC authenticating the client device 10.

When the client device 10 has been idle for a while, it may send an "Enable" message to the gateway device 30 (message 10 in Fig. 4), activating the TCP Wake-Up functionality, and may stop sending UDP keep-alives. The gateway device 30 acknowledges this in message 11.

Later, when the gateway device 30 has a packet it wants to send to the client device 10 (either IKEv2 request or an ESP packet for any of the IPsec SAs associated with this IKE_SA), it sends a "Wake-Up" message over the TCP connection (message 12 in Fig. 4). However, this message is not sent if a predetermined time period, e.g. less than 60 seconds, has elapsed since the previous Wake-Up message, and no "Enable" message has been received during this time.

The gateway device 30 also sends the IKEv2/ESP packet as usual. It is quite likely that the packet will be dropped by the NAT device 20 since it cannot find the mapping. However, the packet will be eventually retransmitted by normal retransmission mechanisms, so losing one packet is not a big problem.

When the client device 10 receives the Wake-Up message, it attempts to update the NAT mappings, i.e., sends an authenticated IKEv2 or ESP packet (in case of normal IKEv2), or an IKEv2 request containing UPDATE_SA_ADDRESSES. This causes a new NAT mapping to be created, and the gateway device 30 updates the SAs with the new mapping (most likely at least the port number has changed).

The client device 10 could also start sending normal UDP keep-alives, and send a "Disable" message turning off the TCP Wake-Up functionality until the next idle period.

Leaving idle mode can also be triggered when an application on the client device 10 sends a packet. In this case, the client device 10 may send the packet as usual. In the case of normal IKEv2 NAT Traversal, the UDP-encapsulated ESP packet is sufficient to update the NAT mapping. In case of mobile IKE, an initial UDP message may contain the UPDATE_SA_ADDRESSES notification.

If the client device 10 suspects that only a very short packet exchange will follow (for instance, an application-level keep-alive), it may move immediately back to idle mode. In this case, the initial TCP message contains "Enable" instead (the "Enable" message is needed to reset the wake-up throttling timer on the gateway, and also serves as a keep-alive for the TCP connection).

As an additional option, when idle, the client device 10 could re-send the "Enable" message regularly, e.g. every 15-30 minutes, to ensure the TCP connection is still working. If the TCP connection fails for some reason, the client device 10 simply establishes a new one.

In Mobile IPv4, the above IKEv2 extension could be followed with small differences. These differences are mainly due to the fact Mobile IPv4 does not have a "session" concept corresponding to an IKE SA. Instead, registration requests can be sent quite frequently. Another difference to the IKEv2 extension is that, in the absence of encrypted extensions, the home agent communicates a key nonce to the client instead of a TCP-Wake-Up-Key. The client and the home agent derive the TCP-Wake-Up-Key from the key nonce and the MN-HA key.

The basic idea is that the client device includes a vendor-specific TCP wake-up extension in the registration request. The TCP wake-up extension is used only with co-located care-of addresses. This is because in the foreign agent care-of address case, the keep-alives are sent by the foreign agent instead of the mobile node, so power consumption is not an issue.

The wake-up extension feature includes the port number the home agent is listening on for TCP connections, a connection identifier that will be used by the client when establishing the TCP connection, and a key nonce for deriving the key that will be used to authenticate the TCP connection.

On subsequent re-registrations, the home agent may return the same connection ID and key nonce values. If the connection ID, key nonce, or care-of address has changed, the mobile node must close the existing TCP connection. If the values have not changed, the mobile node may continue using the existing TCP connection. To avoid the need to frequently re-establish the TCP connection, the home agent may use the same connection ID and key nonce values for at least several hours. However, the key nonce value could be changed at least once every 24 hours.

Since the TCP wake-up extension is intended for the home agent, it can be placed in the Registration Request message before the authorization-enabling extension. Since the TCP wake-up extension is intended for the mobile node, it can be placed in the Registration Reply message before the Mobile-Home Authentication Extension.

The client device can establish the TCP connection either when it registers for the first time using this care-of address, or later when it is about to enter idle mode. The client device may use its local care-of address as the source address for the TCP connection.

The mobile IP client device needs to implement a mechanism by which it can determine whether the connection is idle. This can be based on the lack of recently received and sent data. As an example, an inactivity timer of 30-60 seconds can be used to make the decision to enter idle mode. When entering idle mode, the client device sends an "Enable" message to the home agent, and may stop sending UDP keep-alives. The home agent acknowledges this.

When the home agent receives a packet destined to an idle client device, the home agent could tunnel the packet to the current care-of address as usual. At the same time, the home agent sends the "Wake-Up" message over the TCP connection. However, this message may not be sent if less than 60 seconds have elapsed since the previous Wake-Up message, and no "Enable" message has been received during this time.

Upon receipt of the Wake-Up message, the client performs a mobile IP registration in order to ensure that there are valid UDP mappings in the NATs and that the home agent is up-to-date. The Registration Request and Registration Reply would typically include the TCP wake-up extensions in order to continue using the extensions. The client device could also start sending the standard Mobile IPv4 keep-alives, and send a "Disable" message turning off the TCP Wake-Up functionality until the next idle period. Leaving idle mode can also be triggered when an application on the client device sends a packet.

There is one important difference to the above IPsec case. Namely, the registration request that updates the NAT mapping has to be sent before the actual data packet (in IPsec the order does not matter). If this is not done, the home agent will most likely reject the data packet, since it comes from an unexpected UDP port. If the client device suspects that only a very short packet exchange will follow (for instance, an application-level keep-alive), it may move immediately back to idle mode. In this case, an "Enable" message may be needed to reset the wake-up throttling timer on the home agent, and also serve as a keep-alive for the TCP connection.

The home agent could use relatively long binding lifetimes well in excess of 60s to avoid the need for frequent re-registrations. When idle, the client device could re-send the "Enable" message regularly (by default, every 15 minutes) to ensure that the TCP connection is still working. If the TCP connection fails for some reason, the client device may simply establish a new one.

The TCP-based protocol is identical in the IKEv2/lPsec and Mobile IPv4 cases. In normal situations, a single client device has only a single TCP connection to the gateway device or home agent. However, to allow reliable operation in all circumstances, the gateway device may support several concurrent TCP connections that share the same connection ID and deliver the Wake-Up message to all of them.

The gateway device or home agent can implement some mechanism to ensure that an unnecessary TCP connection state is eventually deleted. In the IPsec case, the gateway device can close the TCP connection when the IKE_SA is closed. If the client device simply disappears, IKEv2 dead peer detection will eventually detect it. For Mobile IPv4, the TCP connection can be closed when the mobility binding lifetime expires, or the client device performs explicit deregistration. However, these mechanisms may still leave dangling TCP connections in the case where the client device is still active, but has opened a new TCP connection without explicitly closing the old one. The simplest approach to deal with this issue is to enable TCP-level keep-alives for the wake-up connections by using the SO_KEEPAUVE socket option. However, it is noted that TCP keep-alives are normally sent only when the connection has been idle for more than two hours, so they are not sufficient to keep the NAT mapping state alive.

The authentication of the TCP connection between the client device and gateway device or home agent deserves some explanation. There are basically three different threats associated with the TCP wake-up connection. First, an attacker could open a TCP connection to the gateway device and pretend to be a valid client device. The attacker would then receive notifications when the client device has incoming packets. This would allow an attacker who is not otherwise able to eavesdrop the packets to perform some kind of traffic analysis. This threat is mitigated by requiring that the parties are authenticated using a cryptographic key when the TCP connection is established, and the key is agreed on in a secure way. Second, an attacker could prevent the client device from waking up when it should, causing incoming packets to be dropped by the NAT. This attack can be carried out by attackers who are on the path between the client device and the gateway device. Integrity protecting the wake-up messages would not change the situation. Third, an attacker could unnecessarily wake up the client device without a good reason, leading to unnecessary power consumption. This attack can also be carried out by an attacker who is on the path between the client device and the gateway device, or is otherwise able to send packets that reach the client device. In general, integrity protecting the wake-up messages would not change the situation significantly, since the client device has already woken up to verify the integrity checksum.

To summarize, the authentication of the TCP connection is intended to counter the first threat, traffic analysis by off-path attackers. The two latter threats would not be significantly affected by per-message integrity protection or encryption, so that may be dispensed with in order to keep the protocol as simple as possible.

The first thread could be mitigated by requiring that the gateway device chooses connection IDs in an unpredictable manner.

As described above, in the first embodiment, the UDP-based encapsulation scheme is not changed, but a new "notification" TCP connection is created in parallel. When the client device 10 has been idle for a (configurable) interval, and a downlink packet arrives at the gateway device 30, the gateway device 30 notifies the client device 10 over the TCP connection. The gateway device 30 may also buffer the downlink packet. The client device 10 then refreshes the tunnel e.g. via MIPv4 registration or IKE signalling, and the gateway device 30 forwards the buffered packets. After this, the VPN or Mobile IP solution works as usual, using UDP encapsulation.

In the event that an application of the client device 10 starts sending packets while the terminal is idle, the client device 10 could send something in the TCP wake-up connection in order to refresh the NAT mappings. This will also reset the keep-alive of the TCP wake-up connection, so essentially the keep-alives of TCP wake-up connection will synchronize with the application's keep-alives.

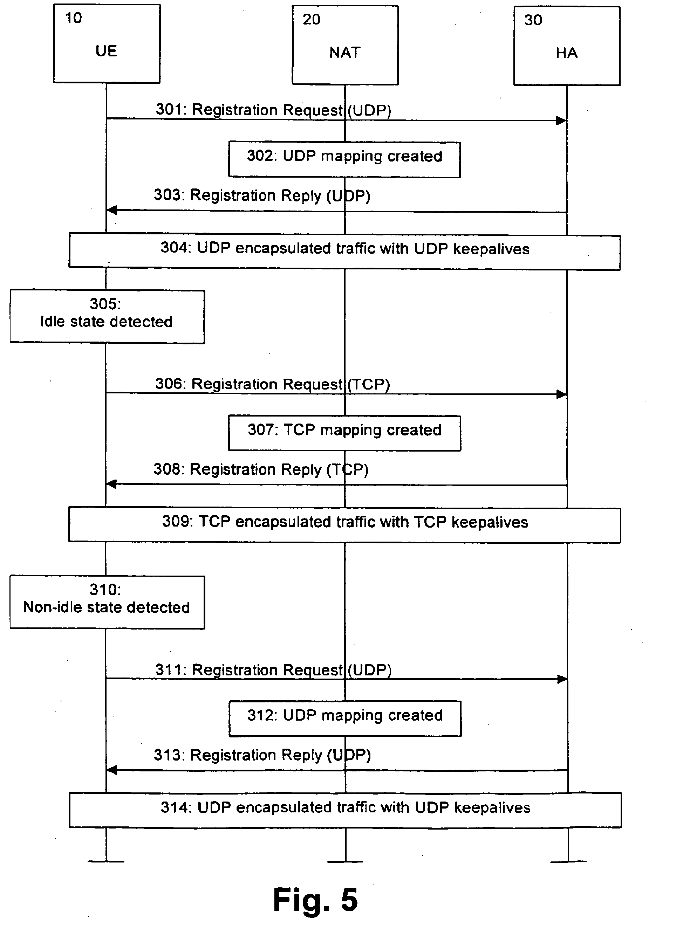

Fig. 5 shows a signaling diagram indicating message exchange and resulting processing steps according to a second embodiment which corresponds to the above-mentioned first aspect of the present invention.

In the second embodiment of the invention, the NAT traversal mechanism for the gateway device 30 (e.g. a tunnelling gateway such as the VPN gateway and the Mobile IP home agent) dynamically adapts the transport protocol used in encapsulation based on the current traffic.

If there is no traffic or very little traffic, then TCP encapsulation is used. Hence, the client device 10 (e.g. mobile device or terminal device or UE) will not need to send UDP keep-alives to refresh NATs when the always-on application is idle. The client device 10 may need to send TCP keep-alives but typically they are not required at the same frequent interval. Still the client device 10 is reachable whenever a server on the public side of the NAT device 20 sends packets to the client device 10.

If there is more traffic (e.g. UDP based real-time traffic), then the client device 10 and the gateway device 30 switch to UDP encapsulation. For example, UDP encapsulation works very well for all applications in Mobile IP and VPNs, so that it can be used whenever there is active communications.

For Mobile IPv4, as indicated in Fig. 5, the second embodiment can be implemented so that in the Registration Request and Registration Reply messages (steps 301 and 303), the client device 10 and the home agent 30 agree whether to use TCP or UDP encapsulation. In Fig. 5, UDP has been used and a UDP mapping is created at the NAT device in step 302. Then, UDP encapsulated traffic with UDP keep-alives is exchanged (step 304). Hence, the client device 10 can dynamically change the transport protocol used in encapsulation by re-registering. If the second embodiment is used, then the TCP connection between the (co-located) care-of address and the home agent 30 can be established after each Mobile IP registration - if necessary, the use of TCP notifications can be negotiated in the registrations.

If an idle state is detected by the client device 10 in step 305, a re-registration process is initiated by the client device 10 and Registration Request and Registration Reply messages (steps 306 and 308) are sent, and the client device 10 and the home agent 30 agree to use TCP encapsulation, and a TCP mapping is created in step 307. Then, during the idle state, TCP encapsulated traffic with less frequent keep-alives can be exchanged (step 309).

When the client device 10 detects in step 310 that the idle state is no longer valid, it initiates another re-registration event is initiated by the client device 10, and Registration Request and Registration Reply messages (steps 311 and 313) are sent, and the client device 10 and the home agent 30 agree to use UDP encapsulation again, and a UDP mapping is created in step 312. Then, during the non-idle state, UDP encapsulated traffic with more frequent keep-alives is again exchanged (step 314).

For IPsec VPNs, the second embodiment can be modified so that in the Internet Key Exchange signalling, the VPN client and the VPN gateway agree whether to use TCP or UDP encapsulation. The VPN client can dynamically change the transport protocol with IKE signalling. If the second embodiment is used, then the TCP connection between the local address and the VPN gateway can be established after tunnel setup and subsequently after each Mobile IKE (MOBIKE) event. If necessary, the use of TCP notifications can be negotiated in IKE signalling.

Another mode of implementation is to let the client device 10 decide which encapsulation to use and adapt to changes implicitly in the gateway/home agent 30. For example, the home agent could determine whether to use UDP or TCP based on whether the client device 10 used UDP or TCP encapsulation in the most recent Registration Request.

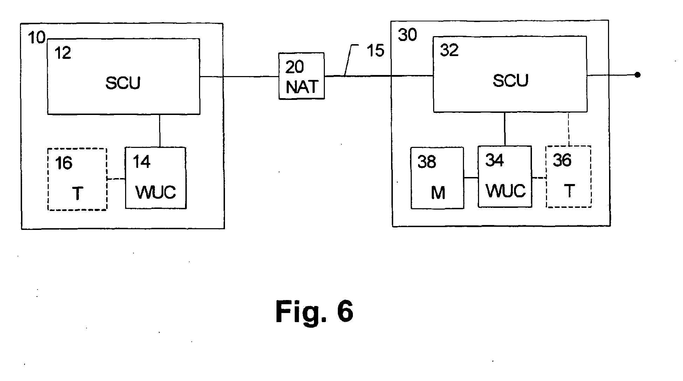

Fig. 6 shows a schematic block diagram of the client device 10 which is connected via the NAT device 20 to a gateway device 30 (or home agent), according to the first and second embodiments.

According to Fig. 6, respective signaling control units 12, 32 are provided at the client device 10 and the gateway device 30, which are responsible for controlling generation and processing of signaling messages, receipt of messages, and transmission of messages via the NAT device 20, based on the negotiated transport protocol.

According to the first and second embodiments, respective wake-up control units 14, 34 are provided at the client device 10 and the gateway device 30. Based on a detected idle state of the client device 10, which may be detected by respective timer functions or units 16, 36 at the client device 10 and/or the gateway device 30, the wake-up control units 14 or 34 initiate the processing described above in connection with the first and second preferred embodiments. As a single timer function at one of the client and gateway devices 10, 30 may be sufficient, the timer units 16 and 36 are shown with dotted lines to indicated their optional character.

In particular, in the first preferred embodiment, the wake-up control unit 34 of the gateway device 30 controls the signaling control unit 32 to provide the connection parameter (address port etc.) for establishing the TCP connection. After the TCP connection has been established, the wake-up control unit 14 of the client device 10 forwards the information (e.g. IKE SA) linking the two alternative connections (e.g. TCP and UDP) to the gateway device 30. In response to an idle state indication output by the timer function 36, the wake-up control unit 34 of the gateway device 30 may then control the signaling control unit 32 to issue the TCP wake-up trigger message. Additionally, a memory 38 may be provided at the gateway device 30, for storing received linking information of different client devices or active connections, so as to retrieve the correct TCP connection for the trigger messages.

In the second preferred embodiment, an idle state indication output by the timer function 16 triggers the wake-up control unit 14 of the client device 10 to start initiation of a re-registration or key exchange procedure. To achieve this, suitable control signals are applied to the signaling control unit 12 to issue the required message and to select a desired transport protocol.

Additionally, the outbound SIP proxy 30 may maintain a list of NATed IP addresses and ports registered by SIP clients arranged behind the NAT device 20 and using UDP. Based on this list, a NAT refreshing unit (not shown) of the outbound SIP proxy 30 generates dedicated messages , e.g. "local scope unknown" SIP requests, as refreshing messages to the respective UEs.

The second embodiment could be modified to an extent that the gateway device 30 delegates the notification connection to a separate device (e.g., a notification agent) that has a different IP address. In this case, the negotiation of the feature could be explicit in the IKEv2 or MobilelP signaling, so that the gateway device 30 would be modified, but still the notification TCP connection would terminate in a separate notification agent.

Finally, according to a third embodiment of the present invention, the gateway device is not modified at all, but a separate notification agent (not shown) is introduced. Here, different transport protocols are not necessarily required. Thus, the third embodiment can be used in cases where the idle period of the first (e.g. UDP) connection cannot be changed. The required connection parameter for the parallel second (e.g. TCP) connection is now implicitly provided in a set-up negotiation via the first connection, while the connection parameter is visible to intermediate nodes that can observe the set-up of the first connection between the client device 10 and the gateway device 30. The connection parameter is used for setting up a parallel second connection between the client device 10 and the separate notification agent with a second predetermined idle period longer than the first predetermined idle period. The notification agent may be arranged to reside in the data path between the client device 10 and the gateway device 30 or to co-locate as a separate function with the gateway device 30. When an idle state of the client device 10 is detected, the second connection is used for transmitting a wake-up notification from the notification agent to the client device 10 in response to the detection result.

In summary, a method, system, client device, gateway device and computer program product for maintaining a state information in an intermediate network function (20), wherein the state information expires after a predetermined idle period. Detecting means are provided for detecting an idle state of a connection. In response to the detecting means, a transport protocol used for encapsulating data is changed from a first protocol with a first predetermined idle period to a second protocol with a second predetermined idle period, said second predetermined idle period being longer than said first predetermined idle period. Alternatively, a connection parameter is provided to the device for a parallel second connection in a set-up negotiation via said first connection. This connection parameter is then used for setting up a parallel second connection to the device based on the second transport protocol used for encapsulating data with the second predetermined idle period. Then, an information linking the first and second connections is transmitted from the device to the data network, wherein the second connection is used for transmitting a wake-up notification to the device in response a detected idle state. Both alternatives provide the advantage of reduced keep-alive signaling and thus enhanced battery efficiency.

It is noted that the present invention is not restricted to the above specific embodiments, but can be applied in any network environment where a state information with a temporary binding function is provided in an intermediate network function. As an alternative example, the present invention can be implemented a stateful firewall. In this case, no address translation is performed but (downlink) packets are filtered out unless there has recently been uplink traffic with the same port numbers. Especially in IPv6 networks, UDP and TCP encapsulation might still be necessary and this technology might be useful to traverse stateful firewalls that apply different timers for UDP and TCP. In stateful firewalls exactly the same problem as with NATs occurs. Namely, keepalives must be sent frequently to prevent the firewall state from expiring, wherein the timeout for UDP state is much shorter than for that TCP. Consequently, use of a separate TCP connection for sending "wake-up" messages, and use of separate notification agent can be implemented in the same or a similar as described above in connection with NATs. When a "client" (i.e., device "behind" the firewall) receives the wake-up message (over the TCP connection), it sends a UDP packet to re-create the state information in the firewall. The only difference to the NAT case is that the address/port seen by the "gateway" (i.e., device "outside" the firewall) does not change, since it is a firewall and not a NAT device. So, the gateway does not need to update anything when it receives the UDP packet. This also means that the packet does not need to be authenticated, unlike in the above NAT embodiment.

Any non-defined, non-standard or non-used message type or portion can be used as the claimed dedicated signaling message. For example, the first embodiment is applicable to both IKEv1 and IKEv2, as both versions work roughly the same way in this regard. Moreover, the present invention gateway device and client device which can be connected via an address translation function. Moreover, packet buffering at a gateway or adaptive tunneling may be examples for implementation, where actual packets are sent over a first connection type (e.g. TCP), and encapsulation mode is switched to a second connection type based on a current situation. Another implementation may be based on timeouts using NAT detection payloads. Furthermore, plain ESP or IP-in-IP can pass through some stateful firewalls (but not NATs), and have similar requirements for keep-alives as UDP. The proposed TCP wake-up extension could be extended to cover those cases as well. To better support real-time applications, it may be possible to switch between TCP and UDP encapsulations dynamically based on traffic needs. When the gateway device wakes up the client device, the packet that triggered the wake-up is usually lost. The gateway device could buffer this packet and send it only after it has received the new NAT mapping. If the client device can somehow discover how long the actual NAT timeout value for UDP traffic is, it could adjust the keep-alive interval.

The preferred embodiment may thus vary within the scope of the attached claims.

## Claims

1. A method of maintaining state information of a device (10) in an intermediate network function (20), wherein said state information expires after a predetermined idle period, said method comprising the steps of:
detecting an idle state of said device (10);
changing a transport protocol used for encapsulating data, transmitted to or from said device (10), from a first protocol with a first predetermined idle period to a second protocol with a second predetermined idle period, in response to the result of said detecting step, said second predetermined idle period being longer than said first predetermined idle period.

2. A method according to claim 1, wherein said state information is a mapping relationship in an address translation function used for providing a translation between a first address used for addressing said device from inside a data network and a second address used for addressing said device from outside said data network.

3. A method according to claim 1, wherein said state information is a filter state information of a firewall function used for deciding on whether to let pass or filter out data packets.

4. A method according to any one of the preceding claims, wherein said first protocol is based on User Datagram Protocol (UDP) and said second protocol is based on Transmission Control Protocol (TCP).

5. A method according to claim 2 or 4, wherein said address translation function is used to process packets generated by Internet Protocol Security (IPsec) or for Mobile Internet Protocol, MIP.

6. A method according to any one of the preceding claims, wherein said detecting step comprises determining an amount of traffic transmitted by said device (10) within a predetermined period of time and comparing said detected amount with a predetermined threshold.

7. A method according to any one of claims 1 to 5, wherein said detecting step comprises determining an amount of time passed since said device (10) has transmitted its last data packet.

8. A method according to any one of the preceding claims, wherein said changing step comprises initiating a re-registration procedure.

9. A method according to any one of claims 1 to 7, wherein said changing step comprises an Internet key exchange signaling.

10. A method of maintaining a state information of a device (10) in an intermediate network function (20), wherein said state information expires after a predetermined idle period, said method comprising the steps of:
setting up a first connection to said device (10) based on a first transport protocol used for encapsulating data with a first predetermined idle period; providing a connection parameter for a parallel second connection in a set-up negotiation via said first connection;
using said connection parameter for setting up a parallel second connection to said device (10) based on a second transport protocol used for encapsulating data with a second predetermined idle period, said second predetermined idle period being longer than said first predetermined idle period;
transmitting an information linking said first and second connections from said device (10);
detecting an idle state of said device (10); and
using said second connection for transmitting a wake-up notification to said device (10) in response to said detecting step.

11. A method of maintaining a state information of a first device (10) in an intermediate network function (20), wherein said state information expires after a predetermined idle period, said method comprising the steps of :
setting up a first connection between said first device (10) and a second device with a first predetermined idle period;
providing implicitly a connection parameter for a parallel second connection in a set-up negotiation via said first connection, said connection parameter being visible to nodes that can observe the set-up of the first connection between said first device (10) and said second device;
using said connection parameter for setting up a parallel second connection between said first device (10) and a separate notification agent with a second predetermined idle period, said second predetermined idle period being longer than said first predetermined idle period, said notification agent being arranged to reside in the data path between said first device (10) and said second device or to co-locate as a separate function with the second device;
detecting an idle state of said first device (10); and
using said second connection for transmitting a wake-up notification from said notification agent to said first device (10) in response to said detecting step.

12. A method according to claim 10 or 11, wherein said state information is a mapping relationship in an address translation function used for providing a translation between a first address used for addressing said device (10) from inside a data network and a second address used for addressing said device (10) from outside said data network.

13. A method according to claim 10 or 11, wherein said state information is a filter state information of a firewall function used for deciding on whether to let pass or filter out data packets.

14. A method according to any one of claims 10 to 13, wherein said first connection is based on User Datagram Protocol (UDP) and said second connection is based on Transmission Control Protocol (TCP).

15. A method according to any one of claims 10 to 12 and 14, wherein said address translation function is used to process packets generated by Internet Protocol Security (IPsec) or for Mobile Internet Protocol, MIP.

16. A method according to any one of claims 10 to 15, wherein said detecting step comprises determining an amount of traffic transmitted by said device (10) within a predetermined period of time and comparing said detected amount with a predetermined threshold.

17. A method according to any one of claims 10 to 15, wherein said detecting step comprises determining an amount of time passed since said device (10) has transmitted its last data packet.

18. A method according to any one of claims 10 to 17, further comprising transmitting an authenticated packet from said device via said intermediate network function (20) in response to a receipt of said wake-up notification.

19. A method according to claim 18, wherein said authenticated packet is an Internet Key Exchange information request or an Encapsulating Security Payload packet.

20. A method according to any one of claims 10 to 18, wherein said set-up negotiation is an Internet Key Exchange negotiation for a security association or a Mobile Internet Protocol registration.

21. A method according to any one of claims 10 to 20, wherein said connection parameter comprises at least one of port number and a connection identifier to be used for said second connection.

22. A method according to claim 21, further comprising the step of exchanging a key for authenticating said second connection with said device (10).

23. A method according to claim 10, wherein said information linking said first and second connections comprises a security parameter index.

24. A method according to any one of claims 10 to 23, wherein said wake-up notification consists of a single data byte. '

25. A method according to any one of claims 10 to 24, further comprising the steps of storing for a predetermined time period a copy of packets transmitted via said first connection, and resending said stored copies if a packet with different addressing information is received from said device (10).

26. A method according to claim 10 or 25, further comprising the step of disabling transmission of keep-alive packets for maintaining said state information of said first connection, if said idle state has been maintained for a predetermined time period.

27. A method according to any one of claims 10 to 26, further comprising the step of transmitting said wake-up notification also via said first connection.

28. A client device for maintaining a state information in an intermediate network function (20), wherein said state information expires after a predetermined idle period, said client device comprising:
detecting means (16) for detecting an idle state of said first connection;
control means (14) for changing a transport protocol used for encapsulating data from a first protocol with a first predetermined idle period to a second protocol with a second predetermined idle period, in response to the result of said detecting step, said second predetermined idle period being longer than said first predetermined idle period.

29. A client device according to claim 28, wherein said state information is a mapping relationship in an address translation function used for providing a translation between a first address used for addressing said client device (10) from inside a data network and a second address used for addressing said client device (10) from outside said data network.

30. A client device according to claim 28, wherein said state information is a filter state information of a firewall function used for deciding on whether to let pass or filter out data packets.

31. A client device according to any one of claims 28 to 30, wherein said first protocol is based on User Datagram Protocol (UDP) and said second protocol is based on Transmission Control Protocol (TCP).

32. A client device according to claim 29, wherein said address translation function is used to process packets generated by Internet Protocol Security (IPsec) or for Mobile Internet Protocol, MIP.

33. A client device according to any one of claims 28 to 32, wherein said detecting means (16) is configured to determine an amount of traffic transmitted by said client device (10) within a predetermined period of time and comparing said detected amount with a predetermined threshold.

34. A client device according to any one of claims 28 to 32, wherein said detecting means (16) are configured to determine an amount of time passed since said client device (10) has transmitted its last data packet.

35. A client device according to any one of claims 28 to 34, wherein said control means (14) are configured to change said transport protocol by initiating a re-registration procedure.

36. A client device according to any one of claims 28 to 34, wherein said control means (14) are configured to change said transport protocol by initiating an Internet key exchange signaling.

37. A computer program product comprising code means for generating the steps of a method according to claim 1, when run on a computer device.

38. A computer program product comprising code means for generating steps of a method according to claim 10, when run on a computer device.

39. A computer program product comprising code means for generating steps of a method according to claim 11, when run on a computer device.

## Patentansprüche

1. Verwaltungsverfahren für Zustandsinformationen eines Geräts (10) bei einer Zwischennetzwerkfunktion (20), wobei die Zustandsinformationen nach einer vorbestimmten Leerlaufzeitdauer ablaufen, wobei das Verfahren die Schritte aufweist:
Erfassen eines Leerlaufzustandes des Geräts (10);
Ändern eines Transportprotokolls, das zum Einkapseln von Daten, die an oder von dem Gerät (10) übertragen werden, verwendet wird, von einem ersten Protokoll mit einer ersten vorbestimmten Leerlaufzeitdauer in ein zweites Protokoll mit einer zweiten vorbestimmten Leerlaufzeitdauer, in Reaktion auf das Ergebnis des Erfassungsschritts, wobei die zweite vorbestimmte Leerlaufzeitdauer länger als die erste vorbestimmte Leerlaufzeitdauer ist.

2. Verfahren gemäß Anspruch 1, wobei die Zustandsinformationen eine Abbildungsbeziehung bei einer Adressenübersetzungsfunktion ist, um eine Übersetzung zwischen einer ersten Adresse, die zum Adressieren des Geräts von innerhalb eines Datennetzwerks verwendet wird, und einer zweiten Adresse, die zum Adressieren des Geräts von außerhalb des Datennetzwerks verwendet wird, bereitzustellen.

3. Verfahren gemäß Anspruch 1, wobei die Zustandsinformationen Filterzustandsinformationen einer Firewall-Funktion sind, die zum Entscheiden darüber verwendet werden, ob Datenpakete durchgelassen oder herausgefiltert werden.

4. Verfahren gemäß einem der vorhergehenden Ansprüche, wobei das erste Protokoll auf einem Anwenderdatagrammprotokoll (UDP) basiert und das zweite Protokoll auf einem Übertragungssteuerungsprotokoll (TCP) basiert.

5. Verfahren gemäß Anspruch 2 oder 4, wobei die Adressübersetzungsfunktion verwendet wird, um Pakete, die durch Internet Protocol Security (IPsec) oder für Mobile Internet Protocol (MIP) erzeugt worden sind, zu verarbeiten.

6. Verfahren gemäß einem der vorhergehenden Ansprüche, wobei der Erfassungsschritt aufweist Bestimmen eines Verkehrsumfangs, der durch das Gerät (10) innerhalb einer vorbestimmten Zeitdauer übertragen wurde, und Vergleichen der erfassten Menge mit einer vorbestimmten Schwelle.

7. Verfahren gemäß einem der Ansprüche 1 bis 5, wobei der Erfassungsschritt aufweist Bestimmen eines Zeitumfangs, der seitdem das Gerät (10) sein letztes Datenpaket übertragen hat, vergangen ist.

8. Verfahren gemäß einem der vorhergehenden Ansprüche, wobei der Änderungsschritt ein Initiieren einer Neuregistrierungsprozedur aufweist.

9. Verfahren gemäß einem der Ansprüche 1 bis 7, wobei der Änderungsschritt eine Internetschlüsselaustauschsignalisierung aufweist.

10. Erweiterungsverfahren für Zustandsinformationen eines Gerätes (10) in einer Zwischennetzwerkfunktion (20), wobei die Zustandsinformationen nach einer vorbestimmten Leerlaufzeitdauer ablaufen, wobei das Verfahren die Schritte aufweist:
Einrichten einer ersten Verbindung mit dem Gerät (10) basierend auf einem ersten Transportprotokoll, das zum Einkapseln von Daten verwendet wird, mit einer ersten vorbestimmten Leerlaufzeitdauer;
Bereitstellen eines Verbindungsparameters für eine parallele zweite Verbindung bei Einrichtungsverhandlungen über die erste Verbindung;
Verwenden des Verbindungsparameters zum Einrichten einer parallelen zweiten Verbindung mit dem Gerät (10) basierend auf einem zweiten Transportprotokoll, das zum Einkapseln von Daten verwendet wird, mit einer zweiten vorbestimmten Leerlaufzeitdauer, wobei die zweite vorbestimmte Leerlaufzeitdauer länger als die erste vorbestimmte Leerlaufzeitdauer ist;
Übertragen von Informationen, welche die erste und zweite Verbindung des Geräts (10) verknüpfen;
Erfassen eines Leerlaufzustandes des Geräts (10); und
Verwenden der zweiten Verbindung zum Übertragen einer Weckbenachrichtigung an das Gerät (10) in Reaktion auf den Erfassungsschritt.

11. Verwaltungsverfahren für eine Zustandsinformation eines ersten Geräts (10) in einer Zwischennetzwerkfunktion (20), wobei die Zustandsinformation nach einer vorbestimmten Leerlaufzeitdauer abläuft, wobei das Verfahren die Schritte aufweist:
Einrichten einer ersten Verbindung zwischen dem Gerät (10) und einem zweiten Gerät mit einer ersten vorbestimmten Leerlaufzeitdauer;
Implizites Bereitstellen eines Verbindungsparameters für eine parallele zweite Verbindung bei einer Einrichtungsverhandlung über die erste Verbindung, wobei der Verbindungsparameter für Knoten sichtbar ist, welche die Einrichtung der ersten Verbindung zwischen dem ersten Gerät (10) und dem zweiten Gerät überwachen können;
Verwenden des Verbindungsparameters zum Einrichten einer parallelen zweiten Verbindung zwischen dem ersten Gerät (10) und einem separaten Benachrichtigungsagenten mit einer zweiten vorbestimmten Leerlaufzeitdauer, wobei die zweite vorbestimmte Leerlaufzeitdauer länger als die erste vorbestimmte Leerlaufzeitdauer ist, wobei der Benachrichtigungsagent eingerichtet ist, im Datenpfad zwischen dem ersten Gerät (10) und dem zweiten Gerät zu sitzen oder als eine separate Funktion mit dem zweiten Gerät gemeinsam angeordnet zu sein;
Erfassen eines Leerlaufzustands des ersten Geräts (10); und
Verwenden der zweiten Verbindung zum Übertragen einer Weckbenachrichtigung vom Benachrichtigungsagenten ans erste Gerät (10) in Reaktion auf den Erfassungsschritt.

12. Verfahren gemäß Anspruch 10 oder 11, wobei die Zustandsinformation eine Abbildungsbeziehung bei einer Adressübersetzungsfunktion ist, zum Bereitstellen einer Übersetzung zwischen einer ersten Adresse, die zum Adressieren des Geräts (10) von innerhalb eines Datennetzwerks verwendet wird, und einer zweiten Adresse, die zum Adressieren des Geräts (10) von außerhalb des Datennetzwerks verwendet wird.

13. Verfahren gemäß Anspruch 10 oder 11, wobei die Zustandsinformationen Filterzustandsinformationen einer Firewall-Funktion sind, die zum Entscheiden darüber verwendet werden, ob Datenpakete durchgelassen oder herausgefiltert werden.

14. Verfahren gemäß einem der Ansprüche 10 bis 13, wobei die erste Verbindung auf einem Anwenderdatagrammprotokoll (UDP) basiert und die zweite Verbindung auf einem Übertragungssteuerungsprotokoll (TCP) basiert.

15. Verfahren gemäß einem der Ansprüche 10 bis 12 und 14, wobei die Adressübersetzungsfunktion verwendet wird, um Datenpakete zu verarbeiten, die durch Internet Protocol Security (IPsec) oder für Mobile Internet Protocol (MIP) erzeugt wurden.

16. Verfahren gemäß einem der Ansprüche 10 bis 15, wobei der Erfassungsschritt aufweist Bestimmen eines Verkehrsumfangs, der durch das Gerät (10) innerhalb einer vorbestimmten Zeitdauer übertragen wurde, und Vergleichen des bestimmten Umfangs mit einer vorbestimmten Schwelle.

17. Verfahren gemäß einem der Ansprüche 10 bis 15, wobei der Erfassungsschritt aufweist Bestimmen einer Zeitdauer, die abgelaufen ist, seit das Gerät (10) sein letztes Datenpaket übertragen hat.

18. Verfahren gemäß einem der Ansprüche 10 bis 17, weiter aufweisend Übertragen eines Authentifizierungspakets vom Gerät über die Zwischennetzwerkfunktion (20) in Reaktion auf eine Empfangsbestätigung der Weckbenachrichtigung.

19. Verfahren gemäß Anspruch 18, wobei das Authentifizierungspaket eine Internetschlüsselaustauschinformationsanforderung oder ein Encapsulating Security Payload-Paket ist.

20. Verfahren gemäß einem der Ansprüche 10 bis 18, wobei die Einrichtungsverhandlung eine Internetschlüsselaustauschverhandlung für eine Sicherheitszuordnung oder ein Anmeldeprotokoll für mobiles Internet ist.

21. Verfahren gemäß einem der Ansprüche 10 bis 20, wobei der Verbindungsparameter aufweist eine Port-Nummer und/oder eine Verbindungskennung, die für die zweite Verbindung zu verwenden ist.

22. Verfahren gemäß Anspruch 21, weiter aufweisend den Austauschschritt eines Schlüssels zur Authentifizierung der zweiten Verbindung mit dem Gerät (10).

23. Verfahren gemäß Anspruch 10, wobei die Informationen, welche die erste und zweite Verbindung verknüpfen, einen Sicherheitsparameterindex aufweisen.

24. Verfahren gemäß einem der Ansprüche 10 bis 23, wobei die Weckbenachrichtigung aus einem einzelnen Datenbyte besteht.

25. Verfahren gemäß einem der Ansprüche 10 bis 24, weiter aufweisend die Schritte: Speichern für eine vorbestimmte Zeitdauer einer Kopie von Paketen, die über die erste Verbindung übertragen wurden, und erneutes Senden der gespeicherten Kopien, wenn ein Paket mit unterschiedlichen Adressinformationen vom Gerät (10) empfangen wird.

26. Verfahren gemäß Anspruch 10 oder 25, weiter aufweisend den Schritt: Abschalten der Übertragung von Keep-alive-Paketen zum Verwalten der Zustandsinformation der ersten Verbindung, wenn der Leerlaufzustand für eine vorbestimmte Zeitdauer verwaltet worden ist.

27. Verfahren gemäß einem der Ansprüche 10 bis 26, weiter aufweisend den Schritt: Übertragen der Aufweckbenachrichtigung auch über die erste Verbindung.

28. Client-Gerät zum Verwalten einer Zustandsinformation in einer Zwischennetzwerkfunktion (20), wobei die Zustandsinformation nach einer vorbestimmten Leerlaufdauer abläuft, wobei das Client-Gerät aufweist:
Erfassungsmittel (16) zum Erfassen eines Leerlaufzustands der ersten Verbindung;
Steuermittel (14) zum Ändern eines Transportprotokolls, das zum Einkapseln von Daten verwendet wird, von einem ersten Protokoll mit einer ersten vorbestimmten Leerlaufzeitdauer in ein zweites Protokoll mit einer zweiten vorbestimmten Leerlaufzeitdauer, in Reaktion auf das Ergebnis des Erfassungsschritts, wobei die zweite vorbestimmte Leerlaufzeitdauer länger als die erste vorbestimmte Leerlaufzeitdauer ist.

29. Client-Gerät gemäß Anspruch 28, wobei die Zustandsinformation eine Abbildungsbeziehung bei einer Adressübersetzungsfunktion ist, die zum Bereitstellen einer Übersetzung zwischen einer ersten Adresse, die zum Adressieren des Client-Geräts (10) von innerhalb eines Datennetzwerks verwendet wird, und einer zweiten Adresse, die zum Adressieren des Client-Geräts (10) von außerhalb des Datennetzwerks verwendet wird.

30. Client-Gerät gemäß Anspruch 28, wobei die Zustandsinformationen FilterZustandsinformationen einer Firewall-Funktion sind, die zum Entscheiden darüber verwendet werden, ob Datenpakete durchgelassen oder herausgefiltert werden.

31. Client-Gerät gemäß einem der Ansprüche 28 bis 30, wobei das erste Protokoll auf einem Anwenderdatagrammprotokoll (UDP) basiert und das zweite Protokoll auf einem Übertragungssteuerungsprotokoll (TCP) basiert.

32. Client-Gerät gemäß Anspruch 29, wobei die Adressübersetzungsfunktion verwendet wird, um Pakete zu verarbeiten, die durch Internet Protocol Securitiy (IPsec) oder für Mobile Internet Protocol (MIP) erzeugt wurden.

33. Client-Gerät gemäß einem der Ansprüche 28 bis 32, wobei die Erfassungsmittel (16) konfiguriert sind, einen Verkehrsumfang zu bestimmen, der durch das Client-Gerät (10) innerhalb einer vorbestimmten Zeitdauer übertragen wurde, und Vergleichen des erfassten Umfangs mit einer vorbestimmten Schwelle.

34. Client-Gerät gemäß einem der Ansprüche 28 bis 32, wobei die Erfassungsmittel (16) konfiguriert sind, um eine Zeitdauer, die abgelaufen ist, seit das Client-Gerät (10) sein letztes Datenpaket übertragen hat.

35. Client-Gerät gemäß einem der Ansprüche 28 bis 34, wobei die Steuermittel (14) konfiguriert sind, das Transportprotokoll durch Initiieren einer Neuregistrierungsprozedur zu ändern.

36. Client-Gerät gemäß einem der Ansprüche 28 bis 34, wobei die Steuermittel (14) konfiguriert sind, das Transportprotokoll durch Initiieren einer Internetschlüsselaustauschsignalisierung zu ändern.

37. Computerprogrammprodukt aufweisend Codemittel zum Erzeugen der Schritte eines Verfahrens gemäß Anspruch 1, wenn es auf einem Computergerät ausgeführt wird.

38. Computerprogrammprodukt umfassend Codemittel zum Erzeugen der Schritte eines Verfahrens gemäß Anspruch 10, wenn es auf einem Computergerät ausgeführt wird.

39. Computerprogrammprodukt aufweisend Codemittel zum Erzeugen der Schritte eines Verfahrens gemäß Anspruch 11, wenn es auf einem Computergerät ausgeführt wird.

## Revendications

1. Procédé pour maintenir des informations d'état d'un dispositif (10) dans une fonction de réseau intermédiaire (20), dans lequel lesdites informations d'état expirent après une période de repos prédéterminée, ledit procédé comportant les étapes ci-après consistant à :
détecter un état au repos dudit dispositif (10) ;
modifier un protocole de transport utilisé pour encapsuler des données transmises vers ou à partir dudit dispositif (10), d'un premier protocole avec une première période de repos prédéterminée à un second protocole avec une seconde période de repos prédéterminée, en réponse au résultat de ladite étape de détection, ladite seconde période de repos prédéterminée étant plus longue que ladite première période de repos prédéterminée.

2. Procédé selon la revendication 1, dans lequel lesdites informations d'état sont une relation de mise en correspondance dans une fonction de transposition d'adresses utilisée pour fournir une transposition entre une première adresse utilisée pour adresser ledit dispositif depuis l'intérieur d'un réseau de données et une seconde adresse utilisée pour adresser ledit dispositif depuis l'extérieur dudit réseau de données.

3. Procédé selon la revendication 1, dans lequel lesdites informations d'état sont des informations d'état de filtre d'une fonction de pare-feu utilisée pour décider s'il convient de laisser passer ou de filtrer des paquets de données.

4. Procédé selon l'une quelconque des revendications précédentes, dans lequel ledit premier protocole est basé sur le protocole de datagramme utilisateur (UDP) et ledit second protocole est basé sur le protocole de contrôle de transmission (TCP).

5. Procédé selon la revendication 2 ou 4, dans lequel ladite fonction de transposition d'adresses est utilisée pour traiter des paquets générés par le protocole internet de sécurité IPSec ou pour le protocole Internet mobile, MIP.

6. Procédé selon l'une quelconque des revendications précédentes, dans lequel ladite étape de détection comporte l'étape consistant à déterminer une quantité de trafic transmise par ledit dispositif (10) au sein d'une période de temps prédéterminée et l'étape consistant à comparer ladite quantité détectée à un seuil prédéterminé.

7. Procédé selon l'une quelconque des revendications 1 à 5, dans lequel l'étape de détection comporte l'étape consistant à déterminer une durée écoulée depuis que ledit dispositif (10) a transmis son dernier paquet de données.

8. Procédé selon l'une quelconque des revendications précédentes, dans lequel ladite étape de modification comporte l'étape consistant à initier une procédure de réenregistrement.

9. Procédé selon l'une quelconque des revendications 1 à 7, dans lequel ladite étape de modification comporte une signalisation d'échange de clef Internet.

10. Procédé pour maintenir des informations d'état d'un dispositif (10) dans une fonction de réseau intermédiaire (20), dans lequel lesdites informations d'état expirent après une période de repos prédéterminée, ledit procédé comportant les étapes ci-après consistant à :
établir une première connexion audit dispositif (10) sur la base d'un premier protocole de transport utilisé pour encapsuler des données avec une première période de repos prédéterminée,
fournir un paramètre de connexion pour une seconde connexion parallèle dans une négociation d'établissement de connexion par l'intermédiaire de ladite première connexion ;
utiliser ledit paramètre de connexion pour établir une seconde connexion parallèle audit dispositif (10) sur la base d'un second protocole de transport utilisé pour encapsuler des données avec une seconde période de repos prédéterminée, ladite seconde période de repos prédéterminée étant plus longue que ladite première période de repos prédéterminée ;
transmettre des informations reliant lesdites première et seconde connexions à partir dudit dispositif (10) ;
détecter un état au repos dudit dispositif (10) ; et
utiliser ladite seconde connexion pour transmettre une notification de réveil audit dispositif (10) en réponse à ladite étape de détection.

11. Procédé pour maintenir des informations d'état d'un premier dispositif (10) dans une fonction de réseau intermédiaire (20), dans lequel lesdites informations d'état expirent après une période de repos prédéterminée, ledit procédé comportant les étapes ci-après consistant à :
établir une première connexion entre ledit premier dispositif (10) et un second dispositif avec une première période de repos prédéterminée ;
fournir implicitement un paramètre de connexion pour une seconde connexion parallèle dans une négociation d'établissement de connexion par l'intermédiaire de ladite première connexion, ledit paramètre de connexion étant visible par des noeuds qui peuvent observer l'établissement de ladite première connexion entre ledit premier dispositif (10) et ledit second dispositif;
utiliser ledit paramètre de connexion pour établir une seconde connexion parallèle entre ledit premier dispositif (10) et un agent de notification distinct avec une seconde période de repos prédéterminée, ladite seconde période de repos prédéterminée étant plus longue que ladite première période de repos prédéterminée, ledit agent de notification étant agencé pour résider dans le chemin de données entre ledit premier dispositif (10) et ledit second dispositif ou pour co-localiser une fonction distincte avec le second dispositif ;
détecter un état au repos dudit premier dispositif (10) ; et
utiliser ladite seconde connexion pour transmettre une notification de réveil dudit agent de notification audit premier dispositif (10) en réponse à ladite étape de détection.

12. Procédé selon la revendication 10 ou 11, dans lequel lesdites informations d'état sont une relation de mise en correspondance dans une fonction de transposition d'adresses utilisée pour fournir une transposition entre une première adresse utilisée pour adresser ledit dispositif (10) depuis l'intérieur d'un réseau de données et une seconde adresse utilisée pour adresser ledit dispositif (10) depuis l'extérieur dudit réseau de données.

13. Procédé selon la revendication 10 ou 11, dans lequel lesdites informations d'état sont des informations d'état de filtre d'une fonction de pare-feu utilisée pour décider s'il convient de laisser passer ou de filtrer des paquets de données.

14. Procédé selon l'une quelconque des revendications 10 à 13, dans lequel ladite première connexion est basée sur le protocole de datagramme utilisateur (UDP) et ladite seconde connexion est basée sur le protocole de contrôle de transmission (TCP).

15. Procédé selon l'une quelconque des revendications 10 à 12 et 14, dans lequel ladite fonction de transposition d'adresses est utilisée pour traiter des paquets générés par le protocole internet de sécurité IPSec ou pour le protocole Internet mobile, MIP.

16. Procédé selon l'une quelconque des revendications 10 à 15, dans lequel ladite étape de détection comporte l'étape consistant à déterminer une quantité de trafic transmise par ledit dispositif (10) au sein d'une période de temps prédéterminée et l'étape consistant à comparer ladite quantité détectée à un seuil prédéterminé.

17. Procédé selon l'une quelconque des revendications 10 à 15, dans lequel ladite étape de détection comporte l'étape consistant à déterminer une durée écoulée depuis que ledit dispositif (10) a transmis son dernier paquet de données.

18. Procédé selon l'une quelconque des revendications 10 à 17, comportant en outre l'étape consistant à transmettre un paquet authentifié à partir dudit dispositif par l'intermédiaire de ladite fonction de réseau intermédiaire (20) en réponse à une réception de ladite notification de réveil.

19. Procédé selon la revendication 18, dans lequel ledit paquet authentifié est une demande d'information d'échange de clef Internet ou un paquet de données de sécurité d'encapsulation.

20. Procédé selon l'une quelconque des revendications 10 à 18, dans lequel ladite négociation d'établissement de connexion est une négociation d'échange de clef Internet pour une association de sécurité ou un enregistrement de protocole Internet mobile.

21. Procédé selon l'une quelconque des revendications 10 à 20, dans lequel ledit paramètre de connexion comporte au moins un numéro de port et un identifiant de connexion à utiliser pour ladite seconde connexion.

22. Procédé selon la revendication 21, comportant en outre l'étape consistant à échanger une clé pour authentifier ladite seconde connexion avec ledit dispositif (10).

23. Procédé selon la revendication 10, dans lequel lesdites informations reliant lesdites première et seconde connexions comportent un index de paramètre de sécurité.

24. Procédé selon l'une quelconque des revendications 10 à 23, dans lequel ladite notification de réveil comporte un unique octet de données.

25. Procédé selon l'une quelconque des revendications 10 à 24, comportant en outre les étapes consistant à stocker pendant une période de temps prédéterminée une copie des paquets transmis par l'intermédiaire de ladite première connexion, et à renvoyer lesdites copies stockées lorsqu'un paquet comportant des informations d'adressage distinctes est reçu par ledit dispositif (10).

26. Procédé selon la revendication 10 ou 25, comportant en outre l'étape consistant à désactiver la transmission de paquets d'entretien pour maintenir lesdites informations d'état de ladite première connexion, lorsque ledit état au repos a été maintenu sur une période de temps prédéterminée.

27. Procédé selon l'une quelconque des revendications 10 à 26, comportant en outre l'étape consistant à transmettre ladite notification de réveil également par l'intermédiaire de ladite première connexion.

28. Dispositif client pour maintenir des informations d'état dans une fonction de réseau intermédiaire (20), dans lequel lesdites informations d'état expirent après une période de repos prédéterminée, ledit dispositif client comportant :
un moyen de détection (16) pour détecter un état au repos de ladite première connexion ;
un moyen de commande (14) pour modifier un protocole de transport utilisé pour encapsuler des données d'un premier protocole avec une première période de repos prédéterminée en un second protocole avec une seconde période de repos prédéterminée, en réponse au résultat de ladite étape de détection, ladite seconde période de repos prédéterminée étant plus longue que ladite première période de repos prédéterminée.

29. Dispositif client selon la revendication 28, dans lequel lesdites informations d'état sont une relation de mise en correspondance dans une fonction de transposition d'adresses utilisée pour fournir une transposition entre une première adresse utilisée pour adresser ledit dispositif client (10) depuis l'intérieur d'un réseau de données et une seconde adresse utilisée pour adresser ledit dispositif client (10) depuis l'extérieur dudit réseau de données.

30. Dispositif client selon la revendication 28, dans lequel lesdites informations d'état sont des informations d'état de filtre d'une fonction de pare-feu utilisée pour décider s'il convient de laisser passer ou de filtrer des paquets de données.

31. Dispositif client selon l'une quelconque des revendications 28 à 30, dans lequel ledit premier protocole est basé sur le protocole de datagramme utilisateur (UDP) et ledit second protocole est basé sur le protocole de contrôle de transmission (TCP).

32. Dispositif client selon la revendication 29, dans lequel ladite fonction de transposition d'adresses est utilisée pour traiter des paquets générés par le protocole internet de sécurité IPSec ou pour le protocole Internet mobile, MIP.

33. Dispositif client selon l'une quelconque des revendications 28 à 32, dans lequel ledit moyen de détection (16) est configuré pour déterminer une quantité de trafic transmise par ledit dispositif client (10) au cours d'une période de temps prédéterminée et pour comparer ladite quantité détectée à un seuil prédéterminé.

34. Dispositif client selon l'une quelconque des revendications 28 à 32, dans lequel ledit moyen de détection (16) est configuré pour déterminer une durée écoulée depuis que ledit dispositif client (10) a transmis son dernier paquet de données.

35. Dispositif client selon l'une quelconque des revendications 28 à 34, dans lequel ledit moyen de commande (14) est configuré pour modifier ledit protocole de transport en initiant une procédure de réenregistrement.

36. Dispositif client selon l'une quelconque des revendications 28 à 34, dans lequel ledit moyen de commande (14) est configuré pour modifier ledit protocole de transport en initiant une signalisation d'échange de clef Internet.

37. Produit programme informatique comportant un moyen de code pour générer les étapes d'un procédé selon la revendication 1, lorsqu'il est exécuté sur un dispositif informatique.

38. Produit programme informatique comportant un moyen de code pour générer les étapes d'un procédé selon la revendication 10, lorsqu'il est exécuté sur un dispositif informatique.

39. Produit programme informatique comportant un moyen de code pour générer les étapes d'un procédé selon la revendication 11, lorsqu'il est exécuté sur un dispositif informatique.
